# EUROPEAN PATENT APPLICATION

(11) **EP 3 453 899 A1**
(43) Date of publication of application: **13.03.2019**
(21) Application number: 17190582.1
(22) Date of filing: 12.09.2017
(51) Int. Cl.: F16B 23/00, B25B 15/00

(54) **THREADED FASTENER AND ASSEMBLY TOOL**

(71) Applicant: Kingi Oy, 01900 Nurmijärvi (FI)
(72) Inventor: Hämäläinen, Paulus, 01900 Nurmijärvi (FI)
(74) Representative: Kolster Oy Ab

(57) **Abstract**

A threaded fastener, and an assembly tool for screwing the threaded fastener. The fastener comprises a head part, and a shank part comprising an external thread. The head part comprises a screw drive (5), the screw drive (5) being a male drive having external and projecting contact surface (6). The contact surface (6) comprises a pattern having at least two points (7) extending outwardly from the longitudinal middle axle (X) of the fastener and having at least to bays (8), the bay (8) being arranged to separate adjacently arranged points (7). The point (7) has a leading contact surface (9) and a trailing contact surface (10), the contact surfaces (9, 10) being arranged at least essentially parallel to the longitudinal middle axle (X) of the fastener. The pattern has an asymmetrical shape such that an imaginary extension (E_{L}) of the leading contact surface (9) passes the longitudinal middle axle (X) of the fastener at a greater distance as an imaginary extension (E_{T}) of trailing contact surface (10).

## Description

### Background

The invention relates to a threaded fastener, comprising a head part, and a shank part comprising an external thread, the head part comprising a screw drive, the screw drive being a male drive having external and projecting contact surface.

The invention further relates to an assembly tool for screwing the threaded fastener claimed in any of the preceding claims, the tool having a driving unit comprising a female recess having internal driving surface.

Paint-coated screws are known, having carbon steel as their basic material.

A problem with these is that the paint layer rather easily breaks or tears in the head part of the screw due to high torques and forces caused by the assembly tool. The damaged coating does not protect the basic material from corrosion, and the appearance of the screw may be unsatisfactory.

### Brief description

Viewed from a first aspect, there can be provided a threaded fastener comprising a head part, and a shank part comprising an external thread, the head part comprising a screw drive, the screw drive being a male drive having external and projecting contact surface, wherein the contact surface comprises a pattern having at least two points extending outwardly from the longitudinal middle axle of the fastener and having at least to bays, the bay being arranged to separate adjacently arranged points, wherein the point has a leading contact surface and a trailing contact surface, the contact surfaces being arranged at least essentially parallel to the longitudinal middle axle of the fastener, wherein the pattern has an asymmetrical shape such that an imaginary extension of the leading contact surface passes the longitudinal middle axle of the fastener at a greater distance as an imaginary extension of trailing contact surface.

Thereby a threaded fastener which stands the forces caused thereon during attaching driving may be achieved.

Viewed from a second aspect, there can be provided an assembly tool for screwing the threaded fastener claimed in any of the preceding claims, the tool having a driving unit comprising a female recess having internal driving surface, wherein the driving surface comprises an asymmetrical shape having a first driving surface and a second driving surface, wherein an imaginary extension of the first driving surface passes the longitudinal middle axle of the assembly tool at a greater distance as an imaginary extension of the second driving surface.

Thereby a tool that save the coating of the threaded fastener may be achieved.

The threaded fastener and the tool are characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

### Brief description of figures

Some embodiments illustrating the present disclosure are described in more detail in the attached drawings, in which
Figure 1 shows schematically a side view of a head part of a threaded fastener,
Figure 2 is a schematic top view of the head part shown in Figure 1, and
Figure 3 shows schematically an assembly tool.

In the figures, some embodiments are shown simplified for the sake of clarity. Similar parts are marked with the same reference numbers in the figures.

### Detailed description

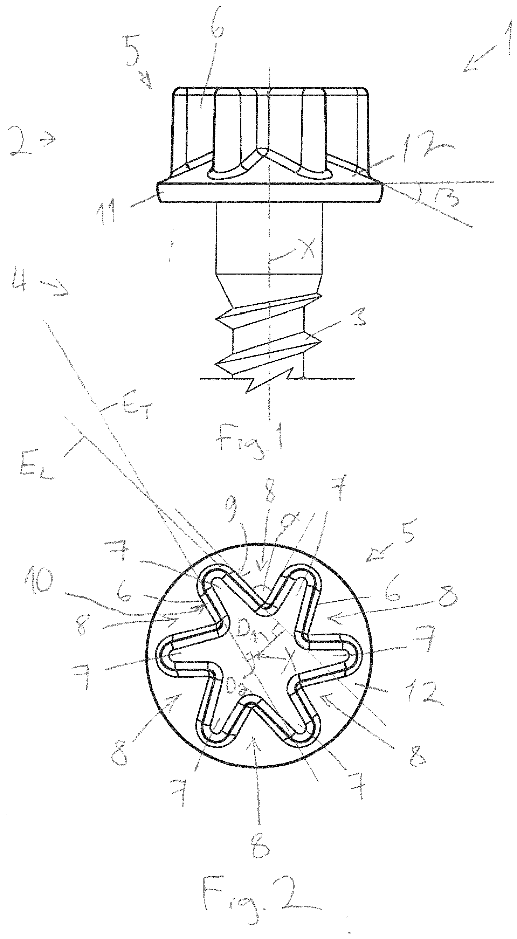

Figure 1 shows schematically a side view of a head part of a threaded fastener, and Figure 2 is a schematic top view of the head part shown in Figure 1.

The threaded fastener 1 comprises a head part 2, and a shank part 4 comprising an external thread 3.

The external thread 3 extends to the head part 2. However, it is to be noted that there may be an unthreaded part between the thread 3 and the head part 2.

The length of the shank part 4 is typically in range of 25 mm - 300 80 mm, and diameter 3 mm - 10 mm.

The fastener 1 can be manufactured from any known screw material, e.g. materials having carbon steel as a basic material, e.g. SAE 1018 or SAE 1022 steel, or stainless steel or aluminium.

The screw 1 or at least part of it may comprise one or more layers of coating(s), e.g. paint-coating, corrosion resistant coating etc.

The head part 2 comprises a screw drive 5 that is a male drive having external and projecting contact surface 6. The contact surface 6 comprises a pattern having six points 7 extending outwardly from the longitudinal middle axle X of the fastener, and six bays 8 being arranged to separate adjacently arranged points 7. In the embodiment shown in Figures 1 and 2, said six points 7 are pitched by 60°, and the angle α between adjacent leading 9 and trailing contact 10 surfaces, a bay 8 therebetween, is 70° to 80°.

An advantage is that the fastener 1 may be screwed by known assembly tools meant for known hex sockets. However, when screwing the fastener in the material, it is highly recommended to use the assembly tool claimed herein in order to maximize the save of the coating. When screwing the fastener out of the material, known tools may also used.

According to an aspect, the head part 2 comprises at least two points 7 and at least to bays 8.

In an embodiment, the head part 2 comprises three points 7 and bays 8.

In an embodiment, the head part 2 comprises four points 7 and bays 8.

In an embodiment, the head part 2 comprises five points 7 and bays 8.

In an embodiment, the head part 2 comprises seven points 7 and bays 8.

In an embodiment, the head part 2 comprises eight points 7 and bays 8.

In an embodiment, the head part 2 comprises nine points 7 and bays 8.

In an embodiment, the head part 2 comprises ten points 7 and bays 8.

An advantage of the embodiments mentioned above is that: as the number of the points becomes less, the points may have mechanically stronger structure; and as the number of the points increases, the surface pressure caused by the assembly tool decreases.

Each of the points 7 has a leading contact surface 9 and a trailing contact surface 10. The trailing contact surface 10 is the surface against which the tool is pressed when the threaded fastener 1 has been driven into the material it is to be locked. The leading contact surface 9 is, on contrary, the surface against which the tool is pressed when the threaded fastener 1 has been driven out or loosen from the material.

The pattern has an asymmetrical shape such that an imaginary extension E_{L} of the leading contact surface 9 passes the longitudinal middle axle X of the fastener at a greater distance D₁ as an imaginary extension E_{T} (distance D₂) of trailing contact surface 10.

An advantage of the asymmetrical shape is that the trailing contact surface 10 is at least essentially perpendicular to the high forces transmitted from the tool driving the fastener 1 in the material. The inventors have found that the damages of the coating of the head part 2 may be avoided or at least drastically minimized, because shearing forces or scratching forces concentrating to the trailing contact surface 10 are minimized.

The end of the point is preferably rounded and it joins smoothly to the contact surfaces 9, 10 of the point. Also the bottom of the bay 8 is preferably rounded and joining smoothly to the contact surfaces 9, 10 of the point.

The thread 3 of the embodiment of the fastener 1 shown in Figures 1 and 2 is a "normal" thread that is screwed clockwise, seen from the top of the fastener, when attached to the material.

It is to be noted, that in some other embodiments the thread may be designed oppositely, i.e. the fastener 1 is screwed anticlockwise when attached to the material. In these embodiments, the leading and trailing contact surfaces 9, 10 are arranged the other way around as in the embodiment shown in the Figures.

The contact surfaces 9, 10 are arranged at least essentially parallel to the longitudinal middle axle X. According to an aspect, the contact surfaces 9, 10 are arranged to a declination γ of 0° - 3° to the longitudinal middle axle X of the fastener.

In an embodiment, the declination γ is 0,5° - 3°.

An advantage is that the tool may be detached form the screw drive easily.

In an embodiment, the declination γ is 1° - 2°.

An advantage is that the tool is easy to arrange on the screw drive and removed thereon, but slipping of the tool on the screw drive is minimized.

In the embodiment of the fastener 1 shown in Figures 1 and 2, the contact surface 9, 10 comprises a planar surface section, and the corresponding imaginary extension E_{L}, E_{T} is an imaginary extension of said plane surface section.

In other embodiments, at least one of the contact surfaces 9, 10 does not have a planar surface section, but the contact surface 9, 10 is concave or convex as seen from top of the fastener - as in Figure 2 - and/or from side - as in Figure 1. In these embodiments, the imaginary extension E_{L}, E_{T} is an imaginary extension tangential to the middle point of the contact surface 9, 10.

According to an aspect, the fastener 1 may have a bearing washer 11. The embodiment shown in Figures 1 and 2 comprises a bearing washer 11, the surface 12 on the side of the screw drive 5 has an angle β of at least 10° to the normal of the longitudinal middle axle X of the fastener.

An advantage is, especially in case of fasteners 1 used for attaching rooftops or for other outdoor use, that water may run away from the bearing washer, and thus risk for corrosion of the fastener may be limited.

In an embodiment, said angle β is at least 20°. An advantage is that, water may run away from the bearing washer even the fastener 1 being attached in a slanting surface, such as in a ridge roof.

According to an aspect, the fastener 1 is a screw. The "screw" means here a threaded fastener that is used with components, at least one of which contains its own internal thread, which even may be formed by the installation of the screw itself. Typically, the screw has a tapering tip, either non-tapping or self-tapping tip. According to an embodiment, the screw is a mounting screw or roof safety screw, used typically for roof safety equipment, such as ladders, steps, service bridges, snow dropping protection systems, etc., sheet metal products, such as profiles, wall cassettes, insulating panels, roofing sheets and sheet metal claddings.

According to another aspect, the fastener is a bolt. The "bolt" means here a threaded fastener that is used for the assembly of two unthreaded components, with the aid of a nut. According to an embodiment, the bolt is a mounting bolt or roof safety bolt, used typically for roof safety equipment, such as ladders, steps, service bridges, snow dropping protection systems, etc.

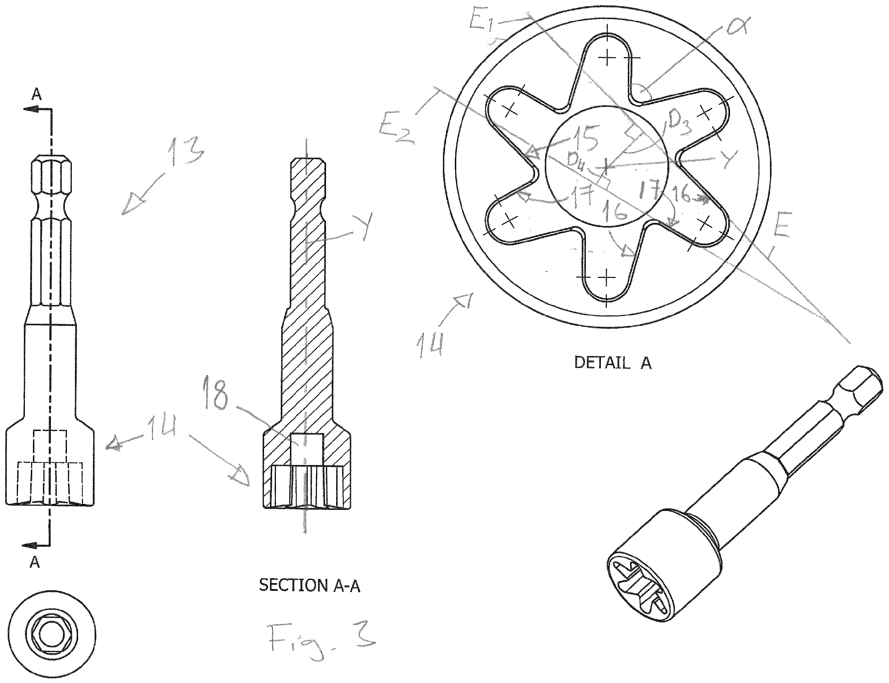

Figure 3 shows schematically an assembly tool for screwing the threaded fastener 1 described in this description. The assembly tool 13 has in its distal end a driving unit 14 that comprises a female recess having internal driving surface 15. The driving surface 15 has been dimensioned and shaped for driving the threaded fastener 1.

The assembly tool 13 may comprise extra features, e.g. a magnet 18 for keeping the fastener attached in the tool.

The assembly tool 13 shown in Figure 3 has in its proximal end an adapter for a hex socket, which is a common socket in e.g. electrical or pneumatical screwdrivers. However, the assembly tool 13 may also be a ring spanner, an open ended spanner, a square head driven socket, etc.

The driving surface 15 comprises an asymmetrical shape having a first driving surface 16 and a second driving surface 17. The first driving surface 16 places itself against the leading contact surface 9 and the second driving surface 17 against the trailing contact surface 10 of the threaded fastener 1.

An imaginary extension E₁ of the first driving surface 16 passes the longitudinal middle axle Y of the tool at a greater distance D₃ as an imaginary extension E₂ (distance D₄) of the second driving surface 16.

It is to be noted, that the view "DETAIL A" in Figure 3 is a view seen from the distal end of the assembly tool 13.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### Reference symbols

- 1: fastener
- 2: head part
- 3: thread
- 4: shank part
- 5: screw drive
- 6: contact surface
- 7: point
- 8: bay
- 9: leading contact surface
- 10: trailing contact surface
- 11: bearing washer
- 12: bearing washer surface
- 13: assembly tool
- 14: driving unit
- 15: internal driving surface
- 16: leading driving surface
- 17: trailing driving surface
- 18: magnet

- α: angle of bay
- β: angle of bearing washer
- γ: angle of declination

- D₁₋₄: distance of imaginary extension
- E_{L}: imaginary extension of leading contact surface
- E_{T}: imaginary extension of trailing contact surface
- E₁: imaginary extension of first driving surface
- E₂: imaginary extension of second driving surface

## Claims

1. A threaded fastener (1), comprising
a head part (2), and
a shank part (4) comprising an external thread (3),
the head part (2) comprising
a screw drive (5),
the screw drive (5) being a male drive having external and projecting contact surface (6), wherein the contact surface (6) comprises
a pattern having at least two points (7) extending outwardly from the longitudinal middle axle (X) of the fastener and having
at least to bays (8), the bay (8) being arranged to separate adjacently arranged points (7), wherein
the point (7) has a leading contact surface (9) and a trailing contact surface (10),
the contact surfaces (9, 10) being arranged at least essentially parallel to the longitudinal middle axle (X) of the fastener, wherein
the pattern has an asymmetrical shape such that
an imaginary extension (E_{L}) of the leading contact surface (9) passes the longitudinal middle axle (X) of the fastener at a greater distance (Di) as an imaginary extension (E_{T}) of trailing contact surface (10).

2. The threaded fastener (1) as claimed in claim 1, wherein the contact surface (9, 10) comprises a planar surface section and the corresponding imaginary extension (E_{L}, E_{T}) is an imaginary extension of said plane surface section.

3. The threaded fastener (1) as claimed in claim 1 or 2, wherein the number of the points (7) is 2 - 10.

4. The threaded fastener (1) as claimed in any of the preceding claims, comprising six points (7), pitched by 60°, and the angle (α) between adjacent leading (9) and trailing contact (10) surfaces, a bay (8) therebetween, being 70° to 80°.

5. The threaded fastener (1) as claimed in any of the preceding claims, comprising a bearing washer (11), the surface (12) on the side of the screw drive (5) having an angle (β) of at least 10° to the normal of the longitudinal middle axle (X) of the fastener.

6. The threaded fastener (1) as claimed in claim 1, wherein the angle (β) is at least 20°.

7. The threaded fastener (1) as claimed in any of the preceding claims, wherein the contact surfaces (9, 10) are arranged to a declination of 0° - 3°, preferably 0,5° - 3°, more preferably to 1° - 2° to the longitudinal middle axle (X) of the fastener.

8. The threaded fastener (1) as claimed in any of the preceding claims, the fastener (1) being a screw having a tapering tip.

9. The threaded fastener (1) as claimed in any one of claims 1 to 7, the fastener being a bolt.

10. An assembly tool for screwing the threaded fastener (1) claimed in any of the preceding claims, the tool (13) having
a driving unit (14) comprising
a female recess having internal driving surface (15), wherein the driving surface (15) comprises an asymmetrical shape having a first driving surface (16) and a second driving surface (17), wherein
an imaginary extension (E₁) of the first driving surface (16) passes the longitudinal middle axle (Y) of the assembly tool at a greater distance (D₃) as an imaginary extension (E₂) of the second driving surface (17).
